# EUROPÄISCHE PATENTSCHRIFT

(11) **EP 1 757 908 B1**
(45) Veröffentlichungstag und Bekanntmachung des Hinweises auf die Patenterteilung: **23.07.2008**
(21) Anmeldenummer: 06010865.1
(22) Anmeldetag: 26.05.2006
(51) Int. Cl.: G01D 5/347, F16D 3/58

(54) **Kupplung und Winkelmesseinrichtung mit dieser Kupplung**
Coupling and angle measuring device with such coupling
Embrayage et dispositif de mesure d'angle pourvu d'un tel embrayage

(30) Priorität: 11.06.2005 DE 102005027071; 29.04.2006 DE 102006020067
(43) Veröffentlichungstag der Anmeldung: 28.02.2007
(73) Patentinhaber: Dr. Johannes Heidenhain GmbH, 83292 Traunreut (DE)
(72) Erfinder: Mitterreiter, Johann, 83339 Chieming (DE)

(56) Entgegenhaltungen:
- EP-A2- 1 353 150
- DE-A1- 10 028 651
- DE-A1- 10 203 278
- DE-U1- 8 205 311
- FR-A- 1 198 842

## Beschreibung

Die Erfindung betrifft eine Kupplung zur Verbindung zweier Bauteile im Sinne einer drehstarren Ausgleichskupplung, welche in axialer und radialer Richtung elastisch wirkt, gemäß dem Patentanspruch 1. Darüber hinaus umfasst die Erfindung auch eine Winkelmesseinrichtung, die mit einer derartigen Kupplung ausgestattet, ist entsprechend dem Anspruch 12.

Winkelmesseinrichtungen, häufig auch Drehgeber genannt, dienen zur Messung von Drehbewegungen eines drehbar gelagerten Körpers, insbesondere einer Welle, über eine oder mehrere Umdrehungen (Multiturn-Funktionsweise). Die Drehbewegung wird dabei inkremental oder absolut erfasst. In Verbindung mit Zahnstangen und Zahnrädern oder mit Gewindespindeln lassen sich mit einer Winkelmesseinrichtung auch lineare Bewegungen messen.

Zum Ausgleich von beispielsweise Fluchtungsfehlern zwischen der Welle einer Winkelmesseinrichtung und der zu messenden Welle werden häufig Kupplungen verwendet. Die Welle der Winkelmesseinrichtung kann dann starr an die zu messenden Welle angebaut werden. Die Kupplung gleicht axiale und radiale Relativbewegungen zwischen der zu messenden Welle und der Messeinheit der Winkelmesseinrichtung aus, bzw. reduziert die dadurch erzeugten Kräfte. Damit das Messergebnis nicht verfälscht wird, ist es wichtig, dass sich die entsprechende Kupplung drehstarr verhält.

Aus der Offenlegungsschrift WO 01/02808 A1 ist eine Kupplung bekannt, die vier Laschen aufweist, welche jeweils um 90° versetzt angeordnet sind. Dabei werden zwei gegenüberliegende, parallel ausgerichtete Laschen jeweils an dem gleichen Bauteil befestigt. Diese Bauweise hat unter anderem den Nachteil, dass die entsprechende Kupplung bei Winkelmesseinrichtungen mit großen Wellendurchmessern (insbesondere bei solchen mit Hohlwellen zur Aufnahme einer zu messenden Welle) vergleichsweise viel Bauraum benötigen.

DE 8205311 U, EP 1353150 und DE 10028651 offenbaren Kupplungen und bzw. Winkelmesseinrichtungen gemäß dem Oberbegriff des Patentanspruches 1

Der Erfindung liegt die Aufgabe zu Grunde, eine Kupplung der eingangs genannten Art zu schaffen, die hervorragende mechanische Eigenschaften aufweist, ein vergleichsweise geringes Bauvolumen benötigt und überaus wirtschaftlich herstellbar ist. Ferner wird durch die Erfindung eine präzise arbeitende Winkelmesseinrichtung geschaffen, welche auch bei großen Wellendurchmessern vergleichsweise geringe Außenmaße aufweist.

Diese Aufgabe wird erfindungsgemäß durch die Schaffung einer Kupplung mit den Merkmalen des Patentanspruchs 1 bzw. einer Winkelmesseinrichtung gemäß Patentanspruch 12 gelöst.

Die Kupplung dient zur axial- bzw. radialelastischen aber drehsteifen Verbindung zweier Bauteile, wobei die Kupplung Basiselemente und mehrere - an die Basiselemente an Knotenbereichen angeformten - Laschen umfasst. Jede Lasche weist mindestens zwei in Umfangsrichtung voneinander beabstandete Stützpunkte auf. Jeweils einer der Knotenbereiche liegt in Umfangsrichtung zwischen Stützpunkten, wobei ein Knotenbereich die Verbindung einer Lasche zu einem Basiselement bildet. Dabei ist zumindest eine der Laschen an ihren Stützpunkten an einem der zwei Bauteile und zumindest eine weitere der Laschen an ihren Stützpunkten am anderen der zwei Bauteile starr befestigbar. Sowohl die Knotenbereiche als auch die Laschen sind derart konfiguriert, dass diese erheblich biegeweicher sind als die Basiselemente.

Die Biegeweichheit bezieht sich hier im Wesentlichen auf die Reaktion der Knotenbereiche und der Laschen auf eine Einleitung von radial oder axial gerichteten Kräften.

Die Laschen sind demnach mit den Basiselementen über die Knotenbereiche verbunden, quasi wie Stäbe eines Fachwerks, die über einen Knotenpunkt miteinander verbunden sind. Im Idealfall kann also der Knotenbereich zu einem Knotenpunkt reduziert werden. In der Realität entspricht beispielsweise der Knotenbereich einem biegeweichen Festkörpergelenk. So kann sich der von benachbarten Basiselementen eingeschlossene Winkel bei Belastung im Betrieb der Kupplung verändern.

In weiterer Ausgestaltung der Erfindung sind die Stützpunkte an den dazugehörigen Laschen in einem Abstand T voneinander beabstandet, wobei die entsprechenden Laschen weiterhin über eine Länge t hinweg an den Knotenbereichen angeformt sind. Das Verhältnis T/t des Abstands T zur Länge t beträgt insbesondere im Hinblick auf die Biegeigenschaften in axialer und / oder radialer Richtung mit Vorteil mindestens 3, insbesondere mindestens 5, in vorteilhafterweise mindestens 7 oder 8. Dabei kann die Lasche auch mit unterbrechenden Aussparungen bzw. perforiert über die Länge t am entsprechenden Knotenbereich angeformt sein.

Ebenso kann insbesondere zur Verbesserung der Biegeigenschaften die Kupplung derart ausgestaltet sein, dass jeweils in radialer Richtung die Knotenbereiche eine kleinste Ausdehnung x aufweisen, und die Basiselemente eine größte Ausdehnung R, wobei das Verhältnis R/x mit Vorteil mindestens 1,75, insbesondere mindestens 2 und insbesondere mindestens 2,5 oder mindestens 3 beträgt.

Als Stützpunkte sind hier die geometrischen Bereiche zu verstehen, in denen die Lasche an ein weiteres Bauteile starr befestigbar ist.

Mit Vorteil besteht die Kupplung aus ein und demselben Material etwa aus Metall, insbesondere aus Stahl, und ist in einer bevorzugten Variante aus einem einstückig geformten Blech hergestellt.

Mit Vorteil ist die Kupplung eben ausgestaltet, insbesondere aus einem ebenen Blech gefertigt. Demnach ist bei dieser Variante die Kupplung im Prinzip kein räumliches Gebilde, insbesondere kein im Raum gebogenes Blechteil.

Durch die neue Gestaltung kann nunmehr ein großer lichter Innendurchmesser der Kupplung erreicht werden, ohne die Außenabmessungen der Kupplung und damit der gesamten Winkelmesseinrichtung übermäßig zu steigern. Der lichte Innendurchmesser kann auch als freier Durchlass beispielsweise für eine Welle gesehen werden. Mit Vorteil ist die Kupplung geometrisch so aufbaut, dass der lichte Innendurchmesser mindestens 60%, insbesondere mindestens 70%, ihres maximalen Außendurchmessers beträgt. Trotz dieses relativ großen lichten Innendurchmessers ist die erfindungsgemäße Kupplung dennoch überraschender Weise überaus drehsteif.

Erfindungsgemäß weist die Kupplung eine Anzahl 2-n von Laschen und / oder Basiselementen auf, wobei n eine natürliche Zahl größer oder gleich 3 ist, insbesondere gleich 4 oder 5 ist.

Zusätzliche vorteilhafte Ausgestaltungen der Erfindung sind den abhängigen Ansprüchen zu entnehmen.

Weitere Merkmale und Vorteile der Erfindung werden bei der nachfolgenden Beschreibung von Ausführungsbeispielen anhand der Figuren deutlich werden.

### Es zeigen:

- Figur 1: eine Draufsicht auf eine Kupplung,
- Figur 2: eine Winkelmesseinrichtung mit der Kupplung im Teil-Schnitt,
- Figur 3: eine Explosionszeichnung der Winkelmesseinrichtung,
- Figur 4: eine Draufsicht auf eine eingebaute Kupplung ohne radiale Belastung,
- Figur 5: eine Draufsicht auf eine eingebaute Kupplung mit radialer Belastung mit nicht-maßstäblichen Verformungen.

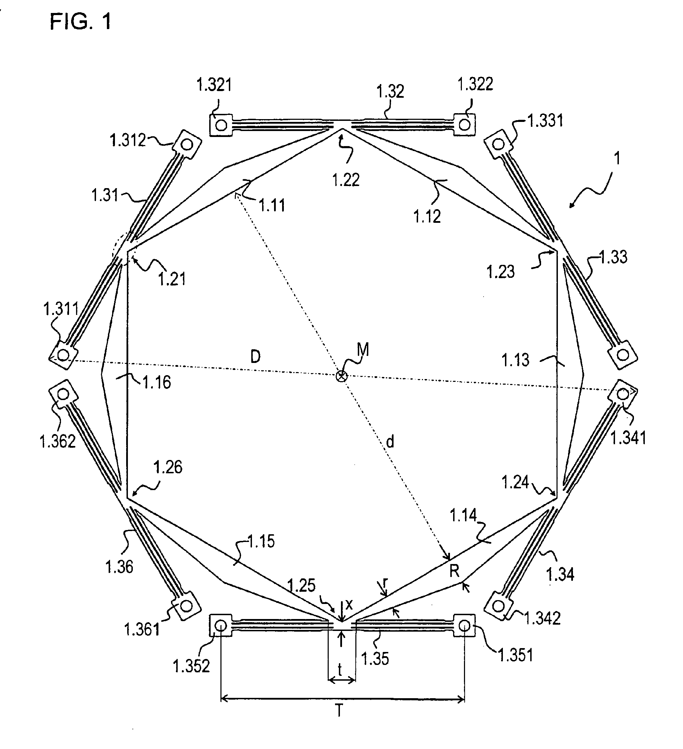

In der Figur 1 ist eine Draufsicht auf eine erfindungsgemäße Kupplung 1 gemäß einem Ausführungsbeispiel gezeigt. Die Kupplung 1 ist einstückig aus einem Blech geformt, wobei im vorgestellten Ausführungsbeispiel die Außenkonturen aus einem 2 mm starken ebenen Blech durch einen Stanzprozess herausgeschnitten wurden. Die Kupplung 1 umfasst sechs Basiselemente 1.11 bis 1.16 und sechs Laschen 1.31 bis 1.36. Zwischen den Basiselementen 1.11 bis 1.16 sind ebenfalls sechs Knotenbereiche 1.21 bis 1.26 angeordnet. An den Knotenbereichen 1.21 bis 1.26 sind entsprechend die Laschen 1.31 bis 1.36 über eine Länge t hinweg angeformt. Der Anschlussbereich der Laschen 1.31 bis 1.36 an die Knotenbereiche 1.21 bis 1.26 weist also die Länge t auf. Wenngleich die Länge t nur einmal in der Figur 1 dargestellt ist, gilt diese geometrische Betrachtung für alle Knotenbereiche 1.21 bis 1.26 bzw. Laschen 1.31 bis 1.36. Nur der Übersichtlichkeit halber wurde auf die Vermassung aller entsprechenden Längen verzichtet. Beispielhaft ist in der Figur 1 der Knotenbereich 1.21 durch eine elliptische Strich-Punkt-Linie hervorgehoben.

Die gezeigte Kupplung 1 ist bezüglich eines Mittelpunkts M punktsymmetrisch ausgestaltet. Gemäß der Figur 1 sind entsprechend die Basiselemente 1.11 bis 1.16, die Laschen 1.31 bis 1.36 und die Knotenbereiche 1.21 bis 1.26 jeweils bezüglich des Mittelpunkts M punktsymmetrisch angeordnet. Weiterhin sind die Basiselemente 1.11 bis 1.16 näher am Mittelpunkt M angeordnet als die Laschen 1.31 bis 1.36. Die symmetrische Ausführung der Kupplung 1 hat zur Folge, dass Verformungen der Kupplung 1 im Betrieb einer damit ausgestatteten Winkelmesseinrichtung vergleichmäßigt werden, was sich letztlich positiv auf die Messgenauigkeit der Winkelmesseinrichtung auswirkt.

Die Kupplung 1 weist einen verhältnismäßig großen lichten Innendurchmesser d auf. Der lichte Innendurchmesser d ist in diesem Ausführungsbeispiel der Durchmesser des kleinsten Kreises um den Mittelpunkt M, der die Innenkontur der Kupplung 1 berührt. Entsprechend ist der Außendurchmesser D der Durchmesser des größten Kreises um den Mittelpunkt M, der die Außenkontur der Kupplung 1 berührt. Der lichte Innendurchmesser d und der Außendurchmesser D sind maßgebliche Größen für den benötigten Bauraum der Kupplung 1 bzw. der Winkelmesseinrichtung. Im Ausführungsbeispiel beträgt das Verhältnis d/D etwa 73 %.

Als axiale Richtung wird im Folgenden die Richtung senkrecht zur Zeichenebene der Figur 1 bezeichnet. Entsprechend ist unter radialer Richtung eine Richtung gemeint, die vom Mittelpunkt M weg nach außen gerichtet ist. Schließlich bedeutet tangentiale Richtung eine Richtung orthogonal zur radialen und axialen Richtung.

In erster Näherung kann die Form der Basiselemente 1.11 bis 1.16 als ein Dreieck beschrieben werden, dessen beide kurzen Schenkel bezüglich des Mittelpunkts M außen liegen. Der lange Schenkel ist jeweils in tangentialer Richtung ausgerichtet (ausgehend von der Mitte des langen Schenkels). Die Basiselemente 1.11 bis 1.16 haben ferner eine radiale Ausdehnung r, R die zu den Knotenbereichen 1.21 bis 1.26 hin abnimmt. Anders ausgedrückt sind die Basiselemente 1.11 bis 1.16 geometrisch so gestaltet, dass deren Ausdehnung r, R, in radialer Richtung mit größer werdendem Abstand von den Knotenbereichen 1.21 bis 1.26 zunimmt. Durch diese geometrische Ausrichtung bzw. Ausgestaltung sind die Basiselemente 1.11 bis 1.16 überaus biegesteif im Hinblick auf tangentiale und radiale Kräfte.

Die Basiselemente 1.11 bis 1.16 sind ferner bezüglich einer gedachten radial gerichteten Linie, die hier durch den Schnittpunkt der beiden kurzen Schenkel verläuft, symmetrisch ausgestaltet.

Jede der sechs Laschen 1.31 bis 1.36 weist zwei in Umfangsrichtung im Abstand T voneinander beabstandete Stützpunkte 1.311 bis 1.362 auf. Die Stützpunkte 1.311 bis 1.362 sind als quadratische Bereiche mit jeweils einer Bohrung ausgestaltet. Damit sich die Laschen 1.31 bis 1.36 auch biegeweich verhalten, wenn sie durch Torsionskräfte belastet werden, sind diese vergleichsweise schmal und lang ausgeführt und überdies geschlitzt. Die Schlitze sind, wie auch die Bohrungen, durch einen Laserprozess in das Blech geschnitten. Unter anderem sind durch den vergleichsweise großen Abstand T und die schmale radiale Ausdehnung der Laschen 1.31 bis 1.36 die Laschen 1.31 bis 1.36 in axialer und radialer Richtung vergleichsweise biegeweich. Insbesondere sind die Laschen 1.31 bis 1.36 an ihren schmalsten Stellen in Radialrichtung schmaler als die größte radiale Ausdehnung R der Basiselemente 1.11 bis 1.16. Unterstützt wird diese Eigenschaft durch die geschlitzte Bauweise der Laschen 1.31 bis 1.36.

Jeder der Knotenbereiche 1.21 bis 1.26 liegt in Umfangsrichtung zwischen zwei Stützpunkten 13.11 bis 13.62, wobei die Knotenbereiche 1.21 bis 1.26 die Verbindung der Laschen 1.31 bis 1.36 zu den Basiselementen 1.11 bis 1.16 bilden. Die Knotenbereiche 1.21 bis 1.26 wirken wie Festkörpergelenke. Durch die entsprechend angepasste geometrische Gestaltung der Knotenbereiche 1.21 bis 1.26 wird zwei benachbarten Laschen 1.31 bis 1.36 bzw. Basiselementen 1.11 bis 1.16 unter Ausnutzung der Materialelastizität eine relative Bewegungsmöglichkeit im Wesentlichen in radialer Richtung verliehen. Die Geometrie ist so angepasst, dass bei radialer oder axialer Belastung der Kupplung 1 in den Knotenbereichen 1.21 bis 1.26 hohe mechanische Spannungen auftreten. Aus diesem Grund weisen die Knotenbereiche 1.21 bis 1.26 in radialer Richtung eine kleinste Ausdehnung x auf, wie in der Figur 1 ersichtlich. Die Materialstärke in radialer Richtung ist also in den Knotenbereichen 1.21 bis 1.26 erheblich reduziert. Die Knotenbereiche 1.21 bis 1.26 und die Laschen 1.31 bis 1.36 sind auf diese Weise also derart konfiguriert, dass diese erheblich biegeweicher sind als die Basiselemente 1.11 bis 1.16. Die Biegeweichheit bezieht sich auf radiale und / oder axiale Belastungen. Demnach führen radiale und / oder axiale Belastungen zu Verformungen in den Knotenbereichen 1.21 bis 1.26 und in den Laschen 1.31 bis 1.36. Mit anderen Worten ausgedrückt, ist das Flächenträgheitsmoment der Basiselemente 1.11 bis 1.16 um radial ausgerichtete Achsen und um axial (orthogonal zur Zeichenebene der Figuren 1, 4 oder 5) Achsen wesentlich größer als die entsprechenden Flächenträgheitsmomente der Knotenbereiche 1.21 bis 1.26 und der Laschen 1.31 bis 1.36. Aus diesem Grund sind die Basiselemente 1.11 bis 1.16 so gestaltet, dass diese zu den Knotenbereiche 1.21 bis 1.26 verjüngt sind, bzw. dass deren Ausdehnung r, R in radialer Richtung mit größer werdendem Abstand von den Knotenbereichen 1.21 bis 1.26 zunimmt.

Insbesondere ist zur positiven Gestaltung der Biegeeigenschaften der Kupplung das Verhältnis T/t des Abstands T zur Länge t so gewählt, dass es im vorgestellten Ausführungsbeispiel 9 beträgt. Zu dem gleichen Zweck beträgt das Verhältnis R/x der größten Ausdehnung R der Basiselemente 1.11 bis 1.16 zur kleinsten Ausdehnung x der Knotenbereiche 1.21 bis 1.26 hier etwa 3,5.

Andererseits ist die erfindungsgemäße Kupplung 1 überaus drehsteif, so dass bei Einleitung von Tangentialkräften in die Stützpunkte 13.11 bis 13.6 praktisch keine Verformungen resultieren, was für die exakte Bestimmung der Winkellage von großer Bedeutung ist.

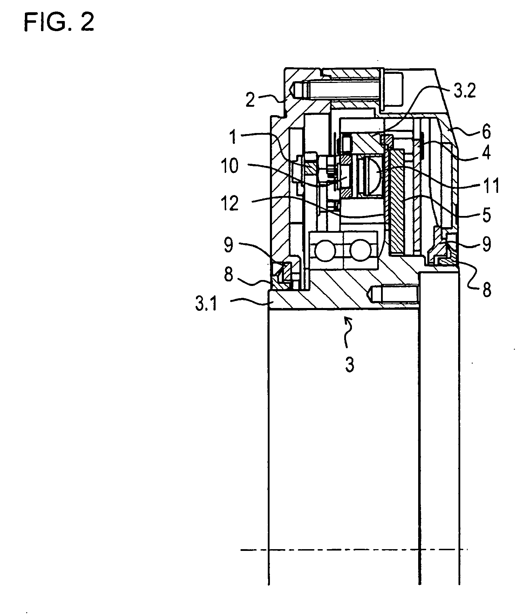

In der Figur 2 ist eine Winkelmesseinrichtung und deren messtechnischen Einrichtungen mit der Kupplung 1 im Teil-Schnitt dargestellt. Die Winkelmesseinrichtung weist eine Lagereinheit 3 auf, die als ein Bauteil einen Außenring 3.2 und eine gegenüber dem Außenring 3.2 drehbare Hohlwelle 3.1 umfasst. Die drehbare Hohlwelle 3.1 ist gemäß der Figur 2 so angeordnet, dass diese die Kupplung 1 durch den lichten Innendurchmesser d hindurch durchdringt.

An der Hohlwelle 3.1 ist eine Teilungsscheibe 5, auf welcher sich eine Winkelteilung bzw. Winkelskalierung befindet, durch Kleben drehfest angebracht. Am Außenring 3.2 ist eine Abtastplatine 4 beispielsweise mittels Schrauben befestigt. Eine Lichtquelle, hier eine LED 10, sendet Licht durch einen Kondensor 11 und eine mit einer Strichteilung versehenen Abtastplatte 12. LED 10, Kondensor 11 und Abtastplatte 12 sind dabei dem stehendem (nicht rotierendem) Teil der Winkelmesseinrichtung zugeordnet.

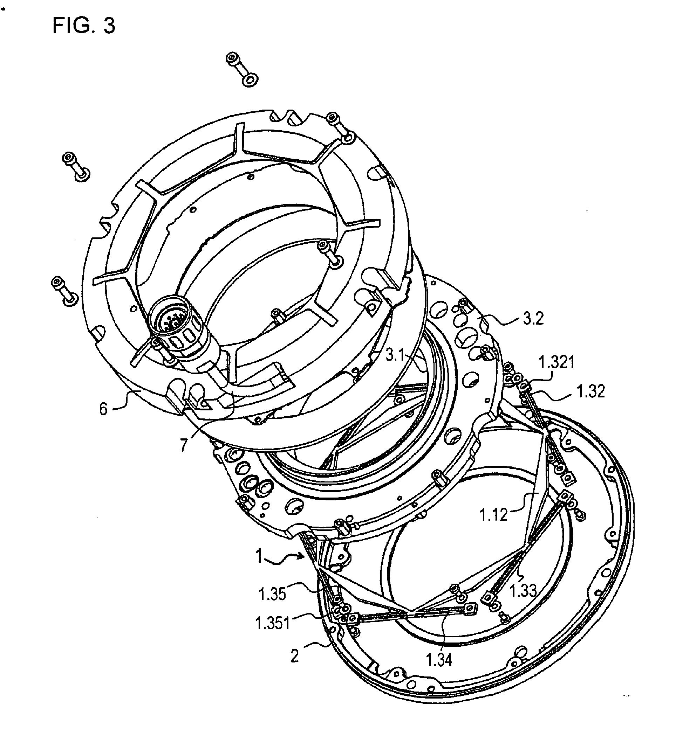

Dagegen ist die Teilungsscheibe 5 an der drehbaren Hohlwelle 3.1 befestigt. Die Teilungsscheibe 5 vermag durch ihre Winkelskalierung das eingestrahlte Licht entsprechend der Winkelstellung der Hohlwelle 3.1 zu modulieren. Das modulierte Licht trifft dann auf Fotodetektoren (in den Figuren nicht dargestellt) der Abtastplatine 4. Dadurch entstehen fotoelektrische Signale, welche die Information über die Winkelstellung der Hohlwelle 3.1 enthalten. Die fotoelektrisch erzeugten Signale werden durch elektronische Bauteile auf der Abtastplatine 4 weiterverarbeitet. Die weiterverarbeiteten Positionssignale werden schließlich über ein Kabel 7 (Figur 3) an ein weiteres Gerät ausgegeben, z. B. an eine Steuerungseinrichtung einer Maschine.

In der Figur 3 ist die Winkelmesseinrichtung mit der Kupplung 1 als Explosionszeichnung gezeigt. Der Übersichtlichkeit halber sind in der Figur 3 nicht alle Bezugszeichen für die Bauelemente der Kupplung 1 eingetragen. In diesem Zusammenhang wird an dieser Stelle auch auf die Figur 1 verwiesen.

Drei Laschen 1.31, 1.33, 1.35 der Kupplung 1 werden mit dem Außenring 3.2 verbunden. Im vorgestellten Ausführungsbeispiel werden zu diesem Zweck durch die Bohrungen in den Stützpunkten 1.311, 1.312; 1.331, 1.332; 1.351, 1.352 Schrauben gesteckt und in Innengewinde des Außenrings 3.2 gedreht. Somit sind also drei Laschen 1.31, 1.33, 1.35 an ihren sechs Stützpunkten 1.311, 1.312; 1.331, 1.332; 1.351, 1.352 an der Lagereinheit 3, insbesondere am Außenring 3.2 starr befestigt.

Die anderen Laschen 1.32, 1.34, 1.36 werden an einem anderen Bauteil der Winkelmesseinrichtung, hier ein Flansch 2, starr befestigt. Hierfür werden die Bohrungen in den Stützpunkten 1.321, 1.322; 1.341, 1.342; 1.361, 1.362 mit Schrauben versehen und die Laschen 1.32, 1.34, 1.36 entsprechend mit dem Flansch 2 starr befestigt. Im vorgestellten Ausführungsbeispiel werden also benachbarte Laschen 1.31 bis 1.36 jeweils an einem anderen Bauteil, hier der Außenring 3.2 und der Flansch 2, starr befestigt, wobei der Außenring 3.2 und der Flansch 2 zwar im Betrieb der Winkelmesseinrichtung nicht rotieren aber dennoch relativ zueinander verschieblich sind. Somit liegen diejenigen Laschen 1.31, 1.33, 1.35 der Kupplung 1, die mit dem Außenring 3.2 verbunden sind, bezüglich des Mittelpunkts M gegenüber den drei anderen Laschen 1.32, 1.34, 1.36, die am Flansch 2 befestigt sind. Auf den Flansch 2 wird abschließend eine Kappe 6 gesetzt und damit verschraubt.

Durch die Kupplung 1 kann eine zu messende Welle starr und drehfest in die Hohlwelle 3.1 der Winkelmesseinrichtung montiert werden, während der Flansch 2 fest an einem Gehäuse angebaut werden kann, dabei werden innerhalb der zulässigen Toleranzen Fluchtungsfehler ausgeglichen. Das heißt, dass während einer Umdrehung der Hohlwelle 3.1 Verbiegebewegungen in den Knotenbereichen 1.21 bis 1.26 und den Laschen 1.31 bis 1.36 stattfinden, und zwar sowohl in axialer als auch radialer Richtung, abhängig von den tatsächlich vorliegenden Fehlern.

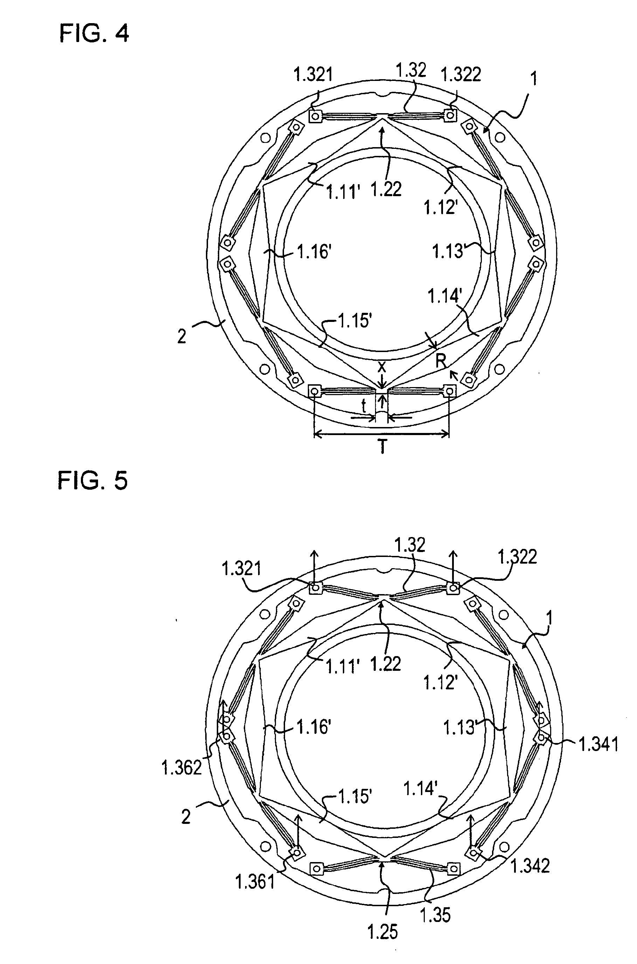

Anhand der Figuren 4 und 5 kann die Funktion der Kupplung 1 anschaulich beschrieben werden. Die Figuren wurden mit Hilfe eines Simulationsprogramms erstellt. Im Unterscheid zur Figur 1 weisen für hier im Simulationsmodell die Basiselemente 1.11' bis 1.16' der Kupplung 1 eine im Wesentliche rautenförmige Geometrie auf.

In der Figur 4 ist die Kupplung in einem Zustand gezeigt, im dem sie radial nicht belastet ist und demnach auch keine Verformungen aufweist. Wird jedoch zum Beispiel infolge eines Fluchtungsfehlers eine radial gerichtete Kraft in die Kupplung eingeprägt, so entstehen Verformungen, wie sie in der Figur 5 in übertriebenem Maßstab dargestellt sind. Die Stützpunkte 1.321, 1.322; 1.341, 1.342; 1.361, 1.362 sind an ein und demselben Bauteil starr befestigt. Durch den simulierten Fluchtungsfehler entsteht nun eine relative Bewegung dieses Bauteils gegenüber dem anderen Bauteil an dem die restlichen Stützpunkte 1.311, 1.312; 1.331, 1.332; 1.351, 1.352 befestigt sind. Diese Relativbewegung hat in der Figur 5 eine Richtung in der Zeichenebene senkrecht nach oben, so dass sich die Stützpunkte 1.321, 1.322; 1.341, 1.342; 1.361, 1.362 gemäß der angegebenen Pfeilrichtung relativ bewegt haben. Es zeigt sich nun, dass maximale Verformungen in den Knotenbereichen und Laschen, insbesondere in den beiden Knotenbereichen 1.22, 1.25, sowie in den Laschen 1.32, 1.35 auftreten. In den Basiselementen 1.11' bis 1.16' sind auch bei extrem überproportional dargestellten Verformungen keinerlei Deformationen zu erkennen. Es sind also sowohl die Knotenbereiche 1.21 bis 1.26 als auch die Laschen 1.31 bis 1.36 erheblich biegeweicher als die Basiselemente 1.11' bis 1.16'. Wie aus der Figur 5 ersichtlich sind im Deformationszustand, im Gegensatz zu herkömmlichen Kupplungen, die Winkel zwischen benachbarten Basiselementen 1.11' bis 1.16' gegenüber dem entspannten Zustand verändert. Beispielsweise hat sich der Winkel zwischen den Basiselementen 1.11' und 1.12' vergrößert, und zwar in der Weise, dass die Basiselementen 1.11' und 1.12' um einen gedachten Punkt im Kotenbereich 1.22 quasi geschwenkt sind. Dennoch bleibt die Kupplung als Ganzes drehstarr, wobei axiale Fehler und radiale Fluchtungsfehler ausglichen werden können. Wie bereits beschrieben, ist die Kupplung hier vollkommen plan ausgeführt, wobei radiale und / oder tangentiale Kräfte zu keiner Verformung in axialer Richtung führen. Dieses Verhalten trägt überdies zu einer hohen Drehsteifigkeit bei.

Im zweiten Ausführungsbeispiel beträgt das Verhältnis T/t des Abstands T zur Länge t ebenfalls 9 während das Verhältnis R/x der größten Ausdehnung R der Basiselemente 1.11' bis 1.16' zur kleinsten Ausdehnung x der Knotenbereiche 1.21 bis 1.26 hier etwa 4,5 beträgt.

Bei der Kupplung 1, wie im Ausführungsbeispiel beschrieben, sind die drei Laschen 1.31, 1.33, 1.35 mit dem Außenring 3.2 verbunden, während die anderen Laschen 1.32, 1.34, 1.36 am Flansch 2 befestigt sind. Die Laschen 1.31, 1.33, 1.35; 1.32, 1.34, 1.36, die jeweils mit ein und dem selbem Bauteil verbunden sind, sind also nicht parallel zueinander ausgerichtet. Aus diesem Grund liegt bei Kupplungen 1, die eine Anzahl 2.n von Laschen 1.31 bis 1.36 und / oder Basiselementen 1.11 bis 1.16; 1.11' bis 1.16' aufweisen (mit n ≥ 3) ein komplexes Verformungsmuster bei Belastung vor. Durch die erfindungsgemäße Gestaltung ist die Kupplung 1 dennoch drehstarr und in axialer und radialer Richtung biegeweich. Der Vorteil der relativ großen Anzahl von Laschen 1.31 bis 1.36 und / oder Basiselementen 1.11 bis 1.16; 1.11' bis 1.16' liegt, wie bereits erwähnt, jedoch darin, dass ein verhältnismäßig großer lichter Innendurchmesser d und damit ein großer freier Durchlass für die Hohlwelle 3.1 erreichbar ist. Andererseits kann durch diese Konstruktion der Außendurchmesser D der Kupplung 1 und damit auch die Außenabmessungen der Winkelmesseinrichtung relativ gering gehalten werden.

Wenngleich die im Ausführungsbeispiel vorgestellte Kupplung 1 zwei Bauteile 2, 3 der Winkelmesseinrichtung verbindet, die nicht drehbar sind (Statorkupplung), umfasst die Erfindung auch Winkelmesseinrichtungen, bei denen die entsprechende Kupplung 1 als Rotorkupplung dient. In diesem Fall ist die Kupplung an zwei drehbaren Bauteilen starr gefestigt, wobei diese drehbaren Bauteile ebenfalls relativ zueinander verschieblich sind.

## Patentansprüche

1. Kupplung (1) zur radialelastischen aber drehsteifen Verbindung zweier Bauteile (2, 3.2) mit
- Basiselementen (1.11 bis 1.16; 1.11' bis 1.16'),
- mehreren an die Basiselemente (1.11 bis 1.16; 1.11' bis 1.16') an Knotenbereichen (1.21 bis 1.26) angeformten Laschen (1.31 bis 1.36), wobei
die Laschen (1.31 bis 1.36) zwei in Umfangsrichtung voneinander beabstandete Stützpunkte (1.311 bis 1.362) aufweisen und
jeweils einer der Knotenbereiche (1.21 bis 1.26) in Umfangsrichtung zwischen Stützpunkten (1.311 bis 1.362) liegt und die Knotenbereiche (1.21 bis 1.26) die Verbindung der Laschen (1.31 bis 1.36) zu den Basiselementen (1.11 bis 1.16; 1.11' bis 1.16') bilden, und
Laschen (1.31 bis 1.36) an ihren Stützpunkten (1.311 bis 1.362) an einem der zwei Bauteile (2) starr befestigbar sind und weitere der Laschen (1.31 bis 1.36) an ihren Stützpunkten (1.311 bis 1.362) am anderen der zwei Bauteile (3.2) starr befestigbar sind, **dadurch gekennzeichnet, dass**
sowohl die Knotenbereiche (1.21 bis 1.26) als auch die Laschen (1.31 bis 1.36) derart konfiguriert sind, dass diese biegeweicher sind als die Basiselemente (1.11 bis 1.16; 1.11' bis 1.16') und die Kupplung (1) eine Anzahl 2·n von Laschen (1.31 bis 1.36) aufweist, wobei n eine natürliche Zahl größer oder gleich 3 ist.

2. Kupplung gemäß dem Anspruch 1, **dadurch gekennzeichnet, dass** die Laschen (1.31 bis 1.36) zwei im Abstand (T) voneinander beabstandete Stützpunkte (1.311 bis 1.362) aufweisen, und die Laschen (1.31 bis 1.36) weiterhin über eine Länge (t) hinweg an den Knotenbereichen (1.21 bis 1.26) angeformt sind, wobei das Verhältnis (T/t)) des Abstands (T) zur Länge (t) mindestens 3, insbesondere mindestens 5, beträgt.

3. Kupplung gemäß dem Anspruch 1 oder 2, **dadurch gekennzeichnet, dass** jeweils in radialer Richtung die Knotenbereiche (1.21 bis 1.26) eine kleinste Ausdehnung (x) und die Basiselemente (1.11 bis 1.16; 1.11' bis 1.16') eine größte Ausdehnung (R) aufweisen, wobei das Verhältnis (R/x) der größten Ausdehnung (R) der Basiselemente (1.11 bis 1.16; 1.11' bis 1.16') zur kleinsten Ausdehnung (x) der Knotenbereiche (1.21 bis 1.26) mindestens 1,75, insbesondere mindestens 2,5 beträgt.

4. Kupplung gemäß einem der vorhergehenden Ansprüche, **dadurch gekennzeichnet, dass** diese, bezüglich eines Mittelpunkts (M) punktsymmetrisch, ausgestaltet ist, und die Basiselemente (1.11 bis 1.16; 1.11' bis 1.16') näher am Mittelpunkt (M) angeordnet sind als die Laschen (1.31 bis 1.36).

5. Kupplung gemäß einem der vorhergehenden Ansprüche, **dadurch gekennzeichnet, dass** die Kupplung (1) eine Anzahl 2·n von Basiselementen (1.11 bis 1.16; 1.11' bis 1.16') aufweist, wobei n eine natürliche Zahl größer oder gleich 3 ist.

6. Kupplung gemäß einem der vorhergehenden Ansprüche, **dadurch gekennzeichnet, dass** diese derart ausgestaltet ist; dass ihr lichter Innendurchmesser (d) mindestens 60% ihres maximalen Außendurchmessers (D) beträgt.

7. Kupplung gemäß einem der vorhergehenden Ansprüche, **dadurch gekennzeichnet, dass** die Kupplung aus einem einstückig geformten Blech besteht.

8. Kupplung gemäß einem der vorhergehenden Ansprüche, **dadurch gekennzeichnet, dass** die Kupplung eben ausgestaltet ist.

9. Kupplung gemäß einem der vorhergehenden Ansprüche, **dadurch gekennzeichnet, dass** die Laschen (1.31 bis 1.36) geschlitzt ausgeführt sind.

10. Kupplung gemäß einem der vorhergehenden Ansprüche, **dadurch gekennzeichnet, dass** die Basiselemente (1.11 bis 1.16; 1.11' bis 1.16') geometrisch so gestaltet sind, dass deren Ausdehnung (r, R) in radialer Richtung mit größer werdendem Abstand von den knotenbereichen (1.21 bis 1.26) zunimmt.

11. Kupplung gemäß einem der vorhergehenden Ansprüche, **dadurch gekennzeichnet, dass** die Basiselemente (1.11 bis 1.16; 1.11' bis 1.16') bezüglich einer radial gerichteten Linie symmetrisch ausgestaltet sind.

12. Winkelmesseinrichtung mit einem ersten Bauteil (2) und einem zweiten Bauteil (3.2), wobei beide Bauteile zueinander verschieblich sind, **dadurch gekennzeichnet, dass** eine Kupplung (1), gemäß einem der vorhergehenden Ansprüche zur radialelastischen aber drehsteifen Verbindung der Bauteile (2, 3) an beiden Bauteilen (2, 3) befestigt ist.

13. Winkelmesseinrichtung gemäß dem Anspruch 12, **dadurch gekennzeichnet, dass** die Winkelmesseinrichtund eine Welle (3.1) umfasst, die als Hohlwelle ausgebildet ist.

14. Winkelmesseinrichtung gemäß dem Anspruch 12 oder 13, **dadurch gekennzeichnet, dass** die Kupplung (1) einen lichten Innendurchmesser (d) aufweist und die Welle (3.1) die Kupplung (1) durch den lichten Innendurchmesser (d) hindurch durchdringt.

## Claims

1. Coupling (1) for the radially resilient but torsion-proof connection of two components (2, 3.2), comprising:
base elements(1.11 to 1.16; 1.11' to 1.16') and
a plurality of tabs (1.31 to 1.36) which are formed integrally with the base elements (1.11 to 1.16; 1.11' to 1.16') at node regions (1.21 to 1.26),
the tabs (1.31 to 1.36) including two support points (1.311 to 1.362) at a distance from one another in a circumferential direction, and
each one of the node regions (1.21 to 1.26) being arranged between support points (1.311 to 1.362) in the circumferential direction and said node regions (1.21 to 1.26) forming the connection of the tabs (1.31 to 1.36) to the base elements (1.11 to 1.16; 1.11' to 1.16'), and
some of the tabs (1.31 to 1.36) being rigidly fixable at their support points (1.311 to 1.362) to one of the two components (2) and others of the tabs (1.31 to 1.36) being rigidly fixable at their support points (1.311 to 1.362) to the other one of the two components (3.2), **characterised in that**
both the node regions (1.21 to 1.26) and the tabs (1.31 to 1.36) are configured in such a way that they are more flexible than the base elements (1.11 to 1.16; 1.11' to 1.16') and the coupling (1) has a number 2·n of tabs (1.31 to 1.36), where n is a natural number greater than or equal to 3.

2. Coupling according to claim 1, **characterised in that** the tabs (1.31 to 1.36) have two support points (1.311 to 1.362) at a distance (T) from each other, and the tabs (1.31 to 1.36) are furthermore formed integrally with the node regions (1.21 to 1.26) over a length (t), the ratio (T/t) of the distance (T) to the length (t) being at least 3, in particular at least 5.

3. Coupling according to either claim 1 or claim 2, **characterised in that** each node region (1.21 to 1.26) has a minimum extension (x) and each base element (1.11 to 1.16; 1.11' to 1.16') has a maximum extension (R) in the radial direction, the ratio (R/x) of the maximum etension (R) of the base elements (1.11 to 1.16; 1.11' to 1.16') to the minimum extension (x) of the node regions (1.21 to 1.26) being at least 1.75, in particular at least 2.5.

4. Coupling according to any one of the preceding claims, **characterised in that** said coupling is arranged rotationally symmetrically about a centre (M), and the base elements (1.11 to 1.16; 1.11' to 1.16') are arranged closer than the tabs (1.31 to 1.36) to the centre (M).

5. Coupling according to any one of the preceding claims, **characterised in that** the coupling (1) has a number 2·n of base elements (1.11 to 1.16; 1.11' to 1.16'), where n is a natural number greater than or equal to 3.

6. Coupling according to any one of the preceding claims, **characterised in that** said coupling is configured in such a way that the unobstructed inner diameter (d) thereof is at least 60% of the maximum outer diameter (D) thereof.

7. Coupling according to any one of the preceding claims, **characterised in that** the coupling consists of a single integrally formed piece of sheet metal.

8. Coupling according to any one of the preceding claims, **characterised in that** the coupling is configured so as to be planar.

9. Coupling according to any one of the preceding claims, **characterised in that** the tabs (1.31 to 1.36) are constructed so as to be slotted.

10. Coupling according to any one of the preceding claims, **characterised in that** the base elements (1.11 to 1.16; 1.11' to 1.16') are geometrically arranged in such a way that the extension (r, R) thereof in the radial direction increases with increasing distance from the node regions (1.21 to 1.26).

11. Coupling according to any one of the preceding claims, **characterised in that** the base elements (1.11 to 1.16, 1.11' to 1.16') are arranged symmetrically about a radially directed line.

12. Angle measurement device comprising a first component (2) and a second component (3.2), the two components being displaceable relative to one another, **characterised in that** a coupling (1) according to any one of the preceding claims is fastened to both components (2, 3) for the radially resilient but torsion-proof connection of said components (2, 3).

13. Angle measurement device according to claim 12, **characterised in that** said angle measurement device comprises a shaft (3.1), which is formed as a hollow shaft.

14. Angle measurement device according to either claim 12 or claim 13, **characterised in that** the coupling (1) has an unobstructed inner diameter (d) and the shaft (3.1) penetrates the coupling (1) all the way through said unobstructed inner diameter (d).

## Revendications

1. Accouplement (1) pour la liaison, élastique dans le sens radial mais rigide en rotation, de deux éléments (2, 3.2), comprenant
- des éléments de base (1.11 à 1.16; 1.11' à 1.16'),
- plusieurs pattes (1.31 à 1.36) formées sur les éléments de base (1.11 à 1.16; 1.11' à 1.16'), dans des zones de noeud (1.21 à 1.26), où
les pattes (1.31 à 1.36) présentent deux points d'appui (1.311 à 1.362) espacés l'un de l'autre dans la direction périphérique, et
chaque fois l'une des zones de noeud (1.21 à 1.26) se situe entre des points d'appui (1.311 à 1.362), dans la direction périphérique, et les zones de noeud (1.21 à 1.26) constituent la liaison des pattes (1.31 à 1.36) avec les éléments de base (1.11 à 1.16; 1.11' à 1.16'), et
des pattes (1.31 à 1.36) peuvent être fixées par leurs points d'appui (1.311 à 1.362) de manière rigide à l'un des deux éléments (2) et d'autres pattes (1.31 à 1.36) peuvent être fixées par leurs points d'appui (1.311 à 1.362) de manière rigide à l'autre élément (3.2), **caractérisé en ce que**
aussi bien les zones de noeud (1.21 à 1.26) que les pattes (1.31 à 1.36) sont configurées de manière à ce qu'elles soient plus souples en flexion que les éléments de base (1.11 à 1.16; 1.11' à 1.16') et **en ce que** l'accouplement (1) présente un nombre 2n de pattes (1.31 à 1.36), n étant un entier naturel supérieur ou égal à 3.

2. Accouplement selon la revendication 1, **caractérisé en ce que** les pattes (1.31 à 1.36) présentent deux points d'appui (1.311 à 1.362), espacés d'une distance (T) l'un de l'autre, et que les pattes (1.31 à 1.36) sont en outre réalisées d'une seule pièce sur une longueur (t) avec les zones de noeud (1.21 à 1.26), le rapport (T/t) entre la distance (T) et la longueur (t) étant au moins de 3, de préférence au moins de 5.

3. Accouplement selon la revendication 1 ou 2, **caractérisé en ce que** dans le sens radial, les zones de noeud (1.21 à 1.26) présentent une dimension minimale (x) et les éléments de base (1.11 à 1.16; 1.11' à 1.16') présentent une dimension maximale (R), le rapport (R/x) entre la dimension maximale (R) des éléments de base (1.11 à 1.16; 1.11' à 1.16') et la dimension minimale (x) des zones de noeud (1.21 à 1.26) étant au moins de 1,75, de préférence au moins de 2,5.

4. Accouplement selon une des revendications précédentes, **caractérisé en ce qu'**il est réalisé avec une symétrie ponctuelle par rapport à un centre (M) et que les éléments de base (1.11 à 1.16; 1.11' à 1.16') sont disposés plus près du centre (M) que les pattes (1.31 à 1.36).

5. Accouplement selon une des revendications précédentes, **caractérisé en ce que** ledit accouplement (1) présente un nombre 2n d'éléments de base (1.11 à 1.16; 1.11' à 1.16'), n étant un entier naturel supérieur ou égal à 3.

6. Accouplement selon une des revendications précédentes, **caractérisé en ce qu'**il est agencé de manière à ce que son diamètre intérieur (d) libre corresponde au moins à 60 % de son diamètre extérieur (D) maximal.

7. Accouplement selon une des revendications précédentes, **caractérisé en ce qu'**il est constitué d'une tôle réalisée d'une seule pièce.

8. Accouplement selon une des revendications précédentes, **caractérisé en ce qu'**il est réalisé sous une forme plane.

9. Accouplement selon une des revendications précédentes, **caractérisé en ce que** les pattes (1.31 à 1.36) sont réalisées avec des fentes.

10. Accouplement selon une des revendications précédentes, **caractérisé en ce que** les éléments de base (1.11 à 1.16; 1.11' à 1.16') sont agencés sur le plan géométrique de manière telle que leur dimension (r, R) dans le sens radial augmente à mesure que la distance par rapport aux zones de noeud (1.21 à 1.26) augmente.

11. Accouplement selon une des revendications précédentes, **caractérisé en ce que** les éléments de base (1.11 à 1.16; 1.11' à 1.16') sont réalisés sous une forme symétrique par rapport à une ligne orientée dans le sens radial.

12. Dispositif de mesure angulaire, comprenant un premier élément (2) et un deuxième élément (3.2), les deux éléments pouvant être déplacés l'un par rapport à l'autre, **caractérisé en ce qu'**un accouplement (1) selon une des revendications précédentes est fixé aux deux éléments (2, 3) en vue de la liaison, élastique dans le sens radial mais rigide en rotation, des éléments (2, 3).

13. Dispositif de mesure angulaire selon la revendication 12, **caractérisé en ce qu'**il comprend un arbre (3.1) qui est réalisé comme arbre creux.

14. Dispositif de mesure angulaire selon la revendication 12 ou 13, **caractérisé en ce que** l'accouplement (1) présente un diamètre intérieur (d) libre et l'arbre (3.1) traverse l'accouplement (1) en passant par ce diamètre intérieur (d) libre.
